# FASCICULE DE BREVET EUROPEEN

(11) **EP 2 244 911 B1**
(45) Date de publication et mention de la délivrance du brevet: **04.09.2013**
(21) Numéro de dépôt: 08866569.0
(22) Date de dépôt: 16.12.2008
(51) Int. Cl.: B60R 16/02, B62D 1/16, B62D 5/00, B60T 7/04, G05G 1/30, H01R 13/73

(54) **AGENCEMENT POUR LE RACCORDEMENT SECURISE D'UN DISPOSITIF ELECTRONIQUE**
ANORDNUNG ZUR SICHEREN VERBINDUNG EINER ELEKTRONISCHEN VORRICHTUNG
ARRANGEMENT FOR THE SECURE CONNECTION OF AN ELECTRONIC DEVICE

(30) Priorité: 21.12.2007 FR 0760189
(43) Date de publication de la demande: 03.11.2010
(73) Titulaire: Renault S.A.S., 92100 Boulogne-Billancourt (FR)
(72) Inventeur: COIFFIER, JEREMIE, F-91400 Orsay (FR); GUILLEMOT, CYRIL, F-78730 Saint Arnault en Yvelines (FR)
(74) Mandataire: Rougemont, Bernard
(86) Numéro de dépôt international: PCT/EP2008/067642
(87) Numéro de publication internationale: WO 2009/083439

(56) Documents cités:
- WO-A-2007/003803
- DE-A1- 19 731 455
- DE-A1-102004 039 998
- GB-A- 2 226 285

## Description

La présente invention se rapporte à un agencement pour le raccordement sécurisé d'un dispositif électronique à au moins deux autres dispositifs électroniques. L'invention propose un agencement pour le raccordement électrique d'un accessoire de véhicule automobile, notamment un dispositif de direction assistée électrique, à une source d'énergie et à au moins un autre dispositif électronique du véhicule, permettant de limiter les risques de déconnexion.

L'invention propose plus particulièrement un agencement pour le raccordement électrique d'un accessoire de véhicule automobile à une source d'énergie électrique et à au moins un dispositif électronique du véhicule, du type qui comporte un connecteur de puissance qui est apte à être monté sur l'accessoire dans une position connectée pour le raccordement de l'accessoire à la source d'énergie électrique, un connecteur de signal qui est apte à être monté sur l'accessoire dans une position connectée pour le raccordement de l'accessoire avec ledit dispositif électronique du véhicule.

Un tel agencement est notamment utilisé pour le raccordement électrique du dispositif de direction assistée d'un véhicule automobile à la batterie du véhicule, d'une part, et à un ou plusieurs capteurs agencés dans le véhicule, d'autre part.

Selon un mode de réalisation connu, le montage et le verrouillage du connecteur de puissance et du connecteur de signal sont systématiquement effectués par un opérateur. Cependant, cette implantation sur le calculateur pose le problème d'une connexion en aveugle sur la chaîne car la zone du calculateur n'est pas facile d'accès et est exiguë. Ceci augmente ainsi le risque que les connecteurs de puissance et de signal ne soient pas bien connectés, et que, par conséquent, ils puissent se déconnecter à tout moment du dispositif de direction assistée et entraîner la perte d'assistance de la colonne.

Une telle déconnexion du connecteur de puissance provoque l'arrêt du dispositif de direction assistée et le conducteur doit alors fournir un effort très important pour agir sur la direction du véhicule.

La déconnexion du connecteur de puissance peut s'avérer particulièrement dangereuse pour le conducteur du véhicule, notamment lorsqu'elle se produit lorsque le véhicule est en mouvement.

Un agencement comprenant les caractéristiques du préambule de la revendication 1 est connu du document WO 20071003803A.

L'invention a pour but de proposer un agencement pour le raccordement électrique du dispositif de direction assistée, ledit aménagement fournissant en outre la possibilité d'une connexion robuste ainsi qu'un accès aisé pour les opérations de montage, de contrôle ou de maintenance en offrant un moyen de vérification supplémentaire visuel.

L'invention atteint son but grâce à un agencement pour le raccordement électrique d'un accessoire de véhicule automobile à une source d'énergie électrique et à au moins un dispositif électronique du véhicule, du type qui comporte :
- au moins un connecteur de puissance qui est apte à être monté sur l'accessoire dans une position connectée pour le raccordement de l'accessoire à la source d'énergie électrique,
- au moins un connecteur de signal qui est apte à être monté sur l'accessoire dans une position connectée pour le raccordement de l'accessoire avec ledit dispositif électronique du véhicule,
caractérisé en ce que le raccordement électrique de l'accessoire s'effectue sur un support disposé sous la colonne de direction à proximité de la zone des pieds d'un conducteur.

Avantageusement, l'invention peut également présenter une ou plusieurs des caractéristiques suivantes :
- le support peut présenter un logement sensiblement en forme de « U » comprenant une base plane horizontale et deux parois latérales sensiblement perpendiculaires à la base, ledit logement comprenant le connecteur de puissance destiné à être connecté avec le connecteur de signal,

Selon l'invention
le support comporte une plaque d'extension s'étendant vers l'arrière et se trouvant sensiblement dans le même plan que la base de manière à protéger la connexion du connecteur de puissance avec le connecteur de signal de son environnement extérieur. Avantageusement,
l'accessoire peut être un dispositif de direction assistée électronique de véhicule automobile.

L'invention concerne également une colonne de direction assistée électrique de véhicule automobile équipée d'un tel agencement de connecteurs pour son raccordement électrique.

D'autres caractéristiques et avantages de l'invention apparaîtront clairement à la lecture de la description suivante, en liaison avec les figures annexées dans lesquelles :
- la figure 1 représente une vue en perspective de côté de l'agencement du support sous la colonne de direction selon l'invention, le pied d'un conducteur étant présent,
- la figure 2 représente une vue en perspective de dessous du support de connecteur selon l'invention, et

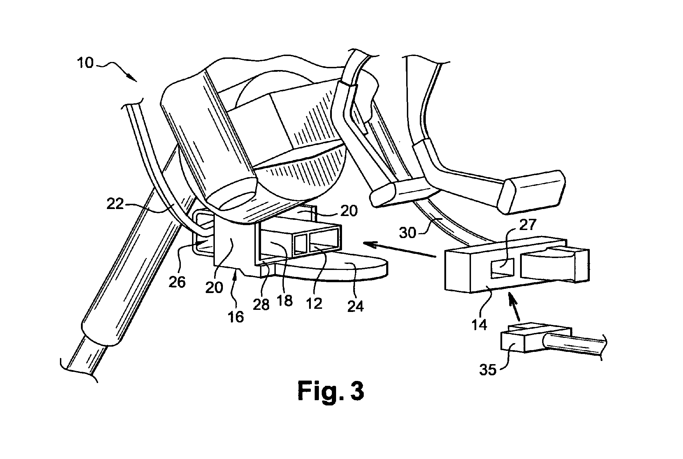

- la figure 3 représente une vue en perspective de l'agencement du support sous la colonne de direction selon l'invention et selon un autre angle.

Dans la description qui va suivre, des éléments identiques, similaires ou analogues seront désignés par les mêmes chiffres de référence.

De même, dans ce qui suit, on désignera par « supérieure» une face d'un élément orienté verticalement vers le haut du véhicule et par « inférieure » toute face opposée à ladite face « supérieure ». Enfin, on désignera les termes « avant » et « arrière » en référence au sens de marche classique d'un véhicule automobile.

En référence aux figures, il est représenté un accessoire 10 de véhicule automobile, qui consiste, par exemple, en un dispositif de direction assistée électrique de véhicule.

De manière conventionnelle, le dispositif de direction assistée 10 comporte un actionneur (non représenté) qui agit sur le système de direction du véhicule pour réduire les efforts que le conducteur doit fournir sur le volant du véhicule, et un dispositif électronique de commande (non représenté) pour déterminer quelle action doit être effectuée par l'actionneur, en fonction de divers paramètres de fonctionnement du véhicule, comme par exemple sa vitesse de déplacement.

Le dispositif de direction assistée 10 est alimenté en énergie électrique provenant d'une source d'énergie électrique, notamment de la batterie du véhicule (non représentée), et son dispositif électronique de commande est raccordé électriquement à un ou plusieurs dispositifs électroniques du véhicule (non représentés), comme par exemple des capteurs de vitesse et des capteurs de la position du volant de direction, pour recevoir des informations relatives aux paramètres de fonctionnement du véhicule. Le raccordement du dispositif de direction assistée 10 à la source d'énergie électrique est réalisé par l'intermédiaire d'un premier connecteur mâle 12 que l'on désignera par la suite « connecteur de puissance mâle » qui est raccordé à un « connecteur de puissance femelle » 14 sur la colonne. Un connecteur de signal 35 vient se connecter sur le « connecteur de puissance femelle» 14 dans un logement 27 présent sur ledit connecteur 14.

Le connecteur de puissance 12 est apte à être monté sur un support 16 fixé sur le dispositif de direction assistée 10 dans une position connectée dans laquelle le dispositif de direction assistée 10 est raccordé à la batterie du véhicule.

Plus précisément, le support est disposé et directement fixé sous la colonne de direction à proximité de la zone des pieds d'un conducteur mais à une distance suffisante pour que ces derniers ne viennent pas heurter le support et risquer de le désolidariser de la colonne de direction. La distance est donnée par le volume des pieds calculé théoriquement selon leur ergonomie et leur débattement lorsqu'un conducteur conduit un véhicule automobile. Le support est fixé par l'intermédiaire de vis, de préférence, sous le carter de la colonne pour des raisons d'ergonomie au montage.

Le support présente un logement sensiblement en forme de « U » comprenant une base 18 plane et horizontale et deux parois latérales 20 sensiblement perpendiculaires à la base. Le support, lorsqu'il est solidaire de la colonne de direction, présente donc un accès avant 26 et un accès arrière 28 au connecteur placé sur ledit support et plus précisément sur la base 18. En effet, grâce à cette configuration, le faisceau électrique 22 du connecteur 12 s'étend de la source d'énergie électrique du véhicule vers le connecteur 12 par l'accès avant du support. Ainsi, selon l'invention, le connecteur 12 positionné sur la base 18 est parfaitement protégé latéralement de l'environnement, grâce aux parois 20, afin d'éviter une déconnexion du connecteur 12 d'avec le connecteur 14 et du connecteur 14 d'avec le connecteur 35, la connexion entre le connecteur 12 et le connecteur 14 d'une part et le connecteur 14 et le connecteur 35 d'autre part s'effectuant par l'accès arrière 28 du support 16. Par ailleurs, il convient de noter que, selon le mode de réalisation de l'invention, ledit support 16 comportant le connecteur de puissance 12 est livré comme tel avec la colonne de direction avant de procéder au montage définitif de la colonne de direction sur le véhicule. Il fait donc, selon l'invention, partie intégrante de la colonne de direction.

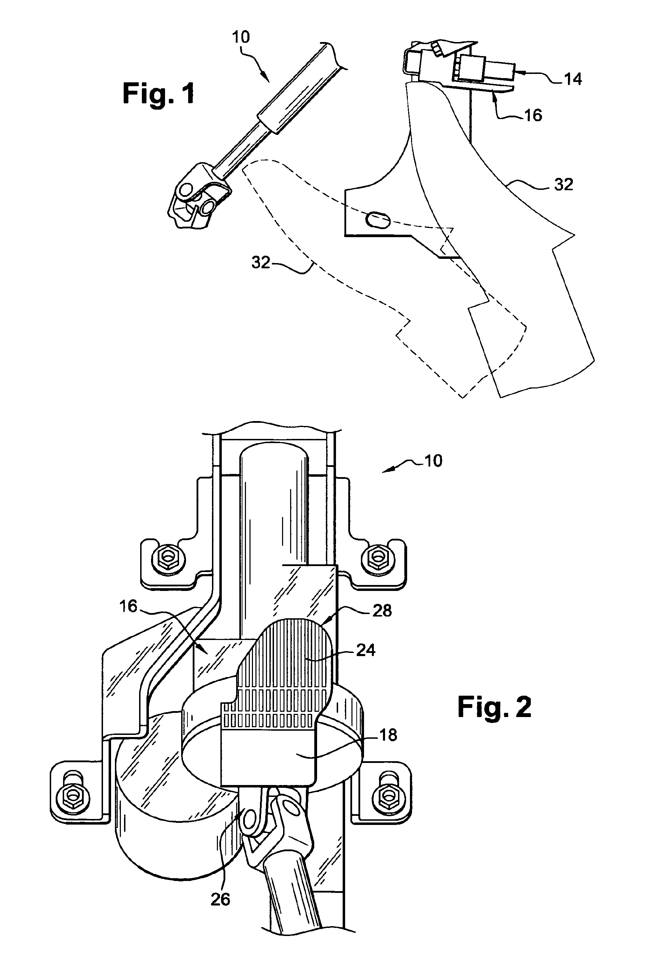

Le support comporte, en outre, une plaque d'extension 24 s'étendant vers l'arrière et se trouvant sensiblement dans le même plan que la base 18 de manière à protéger la connexion du connecteur de puissance mâle 12 avec le connecteur de puissance femelle 14 ainsi que le connecteur de signal 35 de son environnement extérieur. En effet, grâce à cette plaque d'extension, le pied du conducteur ne pourra pas venir déconnecter les connecteurs 12, 14 et 35 puisque la connexion sera inaccessible par le bas. Par ailleurs, sa longueur permettra de supporter le faisceau électrique 30 du connecteur 14 pour éviter qu'il entre en contact, par exemple, avec les pieds 32 d'un conducteur. La figure 1 illustre d'ailleurs l'ergonomie des pieds d'un conducteur et les débattements qu'il peut opérer lorsque le conducteur est assis dans son siège et conduit.

Ainsi, un opérateur souhaitant effectuer la connexion du connecteur de puissance mâle 12 avec le connecteur de puissance femelle 14 ainsi qu'avec le connecteur de signal 35 devra enficher le connecteur mâle 12 avec le connecteur femelle 14 disposé sur le support 16 puis enficher le connecteur de puissance 35 dans le logement 27 du connecteur femelle 14 en y accédant par l'habitacle du véhicule.

Ainsi, grâce à cette disposition du support de connecteur, l'opérateur aura un accès aisé au support et pourra s'assurer visuellement que la connexion des connecteurs 12, 14 et 35 est bien effectuée, l'opération de visualisation de la connexion offrant un moyen de vérification complémentaire par rapport à une connexion effectuée en aveugle et dont le toucher est le seul moyen de vérification. Par conséquent, les opérations de montage seront davantage fiabilisées et les opérations de contrôle ou de maintenance seront beaucoup moins contraignantes puisque les connecteurs seront accessibles facilement et rapidement.

Il convient de noter que pour fiabiliser la connexion des moyens de verrouillage peuvent être présents au niveau des connecteurs 12, 14 et 35.

Selon l'invention, d'autres connecteurs pourront être ajoutés sur ce support suivant les besoins.

Le dispositif selon l'invention permet donc une connexion très sécurisée, aisée et rapide d'une direction assistée électrique de véhicule automobile.

## Revendications

1. Agencement pour le raccordement électrique d'un accessoire (10) de véhicule automobile à une source d'énergie électrique et à au moins un dispositif électronique du véhicule, du type qui comporte :
- au moins un connecteur de puissance (12, 14) qui est apte à être monté sur l'accessoire (10) dans une position connectée pour le raccordement de l'accessoire (10) à la source d'énergie électrique,
- au moins un connecteur de signal (35) qui est apte à être monté sur l'accessoire (10) dans une position connectée pour le raccordement de l'accessoire (10) avec ledit dispositif électronique du véhicule,
**caractérisé en ce que** le raccordement électrique de l'accessoire (10) s'effectue sur un support (16) disposé sous la colonne de direction à proximité de la zone des pieds (32) d'un conducteur, **en ce que** le support (16) comporte, en outre, une plaque d'extension (24) s'étendant vers l'arrière et se trouvant sensiblement dans le même plan que la base (18) dudit support (16), de manière à protéger la connexion du connecteur de puissance (12) avec le connecteur de signal (14) de son environnement extérieur.

2. Agencement selon la revendication 1, **caractérisé en ce que** le support est disposé sous le carter de la colonne de direction.

3. Agencement selon l'une revendications 1 ou 2, **caractérisé en ce que** le support (16) présente un logement sensiblement en forme de « U » comprenant la base (18) plane horizontale et deux parois latérales (20) sensiblement perpendiculaires à la base, ledit logement comprenant le connecteur de puissance (12, 14) destiné à être connecté avec le connecteur de signal (35).

4. Agencement selon l'une de revendications précédentes, **caractérisé en ce que** l'accessoire (10) est un dispositif de direction assistée électronique de véhicule automobile.

5. Colonne de direction assistée électrique de véhicule automobile équipée d'un agencement pour son raccordement électrique selon l'une quelconque des revendications 1 à 4.

## Patentansprüche

1. Anordnung zum elektrischen Verbinden eines Zusatzgeräts (10) eines Kraftfahrzeugs mit einer Quelle für elektrische Energie und wenigstens einer elektronischen Vorrichtung des Fahrzeugs des Typs, der Folgendes umfasst:
- wenigstens einen Leistungsverbinder (12, 14), der am Zusatzgerät (10) in einer verbundenen Position montiert werden kann, um das Zusatzgerät (10) mit der Quelle für elektrische Energie zu verbinden,
- wenigstens einen Signalverbinder (35), der am Zusatzgerät (10) in einer verbundenen Position montiert werden kann, um das Zusatzgerät (10) mit der elektronischen Vorrichtung des Fahrzeugs zu verbinden,
**dadurch gekennzeichnet, dass** das elektrische Verbinden des Zusatzgeräts (10) an einem Träger (16) erfolgt, der unter der Lenksäule in der Nähe des Fußbereichs (32) eines Fahrers angeordnet ist, und **dass** der Träger (16) außerdem eine Verlängerungsplatte (24) aufweist, die sich nach hinten erstreckt und sich im Wesentlichen in derselben Ebene wie die Basis (18) des Trägers (16) befindet, derart, dass die Verbindung des Leistungsverbinders (12) mit dem Signalverbinder (14) vor ihrer äußeren Umgebung geschützt ist.

2. Anordnung nach Anspruch 1, **dadurch gekennzeichnet, dass** der Träger unter dem Lenksäulengehäuse angeordnet ist.

3. Anordnung nach einem der Ansprüche 1 oder 2, **dadurch gekennzeichnet, dass** der Träger (16) einen Aufnahmesitz im Wesentlichen in Form eines "U" aufweist, der die horizontale ebene Basis (18) und zwei zu der Basis im Wesentlichen senkrechte Seitenwände (20) aufweist, wobei der Aufnahmesitz den Leistungsverbinder (12, 14) enthält, der dazu bestimmt ist, mit dem Signalverbinder (35) verbunden zu werden.

4. Anordnung nach einem der vorhergehenden Ansprüche, **dadurch gekennzeichnet, dass** das Zusatzgerät (10) eine elektronische Lenkunterstützungsvorrichtung des Kraftfahrzeugs ist.

5. Elektrische unterstützte Lenksäule für Kraftfahrzeug, die mit einer Anordnung für ihre elektrische Verbindung nach einem der Ansprüche 1 bis 4 ausgerüstet ist.

## Claims

1. Arrangement for the electrical connection of a motor vehicle accessory (10) to an electric power source and to at least one electronic device of the vehicle, of the type that comprises:
- at least one power connector (12, 14) which is capable of being mounted on the accessory (10) in a connected position for the connection of the accessory (10) to the electric power source,
- at least one signal connector (35) which is capable of being mounted on the accessory (10) in a connected position for the connection of the accessory (10) to said electronic device of the vehicle,
**characterized in that** the accessory (10) is electrically connected to a support (16) placed beneath the steering column close to the area of the feet (32) of a driver, **and in that** the support (16) also comprises an extension plate (24) extending rearward and being substantially in the same plane as the base (18) of said support (16) so as to protect the connection of the power connector (12) to the signal connector (14) from its external environment.

2. Arrangement according to Claim 1, **characterized in that** the support is placed beneath the casing of the steering column.

3. Arrangement according to either of Claims 1 and 2, **characterized in that** the support (16) has a substantially U-shaped housing comprising a horizontal flat base (18) and two side walls (20) substantially perpendicular to the base, said housing comprising the power connector (12, 14) designed to be connected to the signal connector (35).

4. Arrangement according to one of the preceding claims, **characterized in that** the accessory (10) is a motor vehicle electronic assisted steering device.

5. Electric assisted steering column of a motor vehicle, which column is fitted with an arrangement for its electrical connection according to any one of Claims 1 to 4.
